# EUROPÄISCHE PATENTANMELDUNG

(11) **EP 3 343 255 A1**
(43) Veröffentlichungstag der Anmeldung: **04.07.2018**
(21) Anmeldenummer: 17002091.1
(22) Anmeldetag: 22.12.2017
(51) Int. Cl.: G02B 6/13, G02B 6/12, G02B 6/125, G01N 21/77

(54) **SUBSTRAT UND DESSEN HERSTELLUNG**

(30) Priorität: 31.12.2016 DE 102016015587
(71) Anmelder: Technische Universität Braunschweig, 38106 Braunschweig (DE)
(72) Erfinder: Döring, Sebastian, 38118 Braunschweig (DE); Rabe, Torsten, 38126 Braunschweig (DE)
(74) Vertreter: Ahrens, Thomas

(57) **Zusammenfassung**

Die vorliegende Erfindung betrifft ein Substrat, das Kanäle aufweist, durch die ein Lichtwellenleiter und/oder ein mikrofluidischer Kanal auf einfache Weise und dennoch in präziser Ausführung realisiert werden kann. Ergänzend umfasst die Erfindung auch ein Verfahren zur Herstellung eines solchen Substrats.

Das erfindungsgemäße Substrat wird gebildet aus einem vorstrukturierten Substrat, das eine Vielzahl von abschnittsweisen Vertiefungen enthält, die netzwerkartig miteinander verbunden sind. Durch Fotolithografie-Verfahren werden mehrere dieser Abschnitte einerseits miteinander verbunden und andererseits gegenüber anderen unerwünschten Abschnitten abgegrenzt.

Die erfindungsgemäßen Substrate lassen sich beispielsweise verwenden für den Bereich der integrierten Optik sowie auch zur Messung an Flüssigkeiten und/oder Gasen, die durch die mikrofluidischen Kanäle geleitet werden.

## Beschreibung

Die vorliegende Erfindung betrifft ein Substrat für Lichtwellenleiter, für Mikrofluidik-Systeme und/oder dergleichen sowie ein Verfahren zur Herstellung eines solchen Substrats.

Das erfindungsgemäße Substrat betrifft u.a. den Bereich der integrierten Optik, für den bereits verschiedene Komponenten und Herstellungsverfahren bekannt sind. Gemäß der Dissertation "Polyacrylate und Polylactone für Anwendungen in einmodigen, integriert optischen, passiven Wellenleitern", von Dipl.-Chem. Matthias Jöhnck, Dortmund, Juni 2000, sind dafür beispielsweise Wellenleiterkomponenten erhältlich auf Basis ionenausgetauschter Gläser, von LiNbO₃, von SiO₂ auf Si und Komponenten, die durch geeignetes Verschmelzen von Glasfasern hergestellt sind. Weiterhin sind integrierte optische Komponenten auf Polymerbasis bekannt, die eine drastische Reduktion der Herstellungskosten ermöglichen. Auch könnte die Herstellung polymer optischer ein- und mehrmodiger Komponenten mit bestehenden Massenfabrikationstechniken beispielsweise zur Herstellung von Platinen kombiniert werden. Neben dem Einsatz in einmodigen Wellenleiterkomponenten, wie beispielsweise optischen Verteilern, Schaltern, Multiplexern und Demultiplexern, sind Polymere mit entsprechenden optischen Eigenschaften insbesondere für die Verwendung in Polymer Optischen Fasern (POF) und somit im Mehrmodenbetrieb von Interesse.

Laut der genannten Dissertation sind zahlreiche Technologien zur Herstellung polymerer, integriert optischer Komponenten bekannt. Diese lassen sich im Wesentlichen untergliedern in die Ionenimplantation, das Photolocking, die selektiv induzierte Laser- bzw. UV-Polymerisation, das reaktive lonenätzen (RIE) und die Replikationstechnologien. Für Einzelheiten dazu wird auf die genannte Dissertationsschrift verwiesen.

Das erfindungsgemäße Substrat betrifft außerdem Mikrofluidik-Systeme, insbesondere mikrofluidische Analysesysteme, die in der modernen Analytik und Diagnostik in den letzten Jahren verstärkt Einzug gehalten haben. Zu den Vorteilen dieser Lab-on-Chip-Systeme gehören neben dem geringen Probenverbrauch und den schnellen Analysezeiten auch die Vereinfachung komplexer Prozessabfolgen durch Integration. Darauf geht folgender Artikel näher ein: "Rationelle Replikation mit Gießen und Rakeln", Mikroproduktion 4/2006, Carl Hanser Verlag, München, S. 14ff. Demnach haben die Polydimethylsiloxane (PDMS) in der Herstellung von mikrofluidischen Analysechips eine lange Tradition. Denn diese Materialien sind zum einen chemisch resistent und biokompatibel, zum anderen lassen sich mit ihnen durch Abformung geätzter Glasmaster auf einfache Weise Mikrokanalstrukturen erzeugen. Mithilfe eines dort beschriebenen replikativen Verfahrens, das auch die Schritte Gießen und Rakein umfasst, lassen sich auch optische Lagen aus polymeren Lichtwellenleitern kostengünstig und rational realisieren. Diese Lichtleiter lassen sich wohl auch in konventionelle Platinen integrieren und sollen so eine schnelle Datenübertragung ermöglichen.

Aus der deutschen Patentschrift DE 42 28 853 C2 sind außerdem ein optischer Wellenleiter mit einem im Wesentlichen planaren Substrat bekannt, sowie ein entsprechendes Herstellungsverfahren. Der dortige Wellenleiter soll eine hohe Bruchfestigkeit besitzen und dessen Substrat soll für die wirtschaftliche Herstellung optischer Mikrostrukturen geeignet sein und eine einfache und wirtschaftliche Weiterverarbeitung des Wellenleiters zu Fertigprodukten erlauben. Dazu wird ein Substrat verwendet, das aus Kunststoff oder aus einem Material mit hohem organischen Anteil besteht, auf das eine organisch wellenleitende Schicht aufgebracht ist.

Die aus dem Stand-der-Technik bekannten Substrate für Lichtwellenleiter und/oder Mikrofluidik-Systeme bzw. die zugehörigen Herstellungsverfahren haben folgende Nachteile. Es können entweder nur fixe Strukturen und damit festgelegte Funktionen im Rahmen eines Hochdurchsatzverfahrens, wie beispielsweise Spritzguss, ermöglicht werden. Oder es werden für qualitativ hochwertige Substrate mit flexiblen individuellen Funktionen kosten- und zeitintensive Verfahren eingesetzt, wie beispielsweise Photolithografie, Laserdirektschreiben, Elektronenstrahllithografie oder lonenstrahllithografie, die zwar ein hohes Auflösungsvermögen besitzen, jedoch sehr lange Schreibzeiten erfordern. Dabei ist zu berücksichtigen, dass für die Photolithografie eine vorstrukturierte Maske benötigt wird, die üblicherweise aufwendig mittels Laserdirektschreiben oder Elektronenstrahlschreiben hergestellt wird.

Es ist zwar auch möglich, individuelle Strukturen kostengünstig mittels Tintenstrahldruck herzustellen. Doch besitzt diese Technologie eine begrenzte Genauigkeit aufgrund der tröpfchenbasierten Abscheidung von Material. Für die Realisierung von Strukturtiefen im Bereich einiger Mikrometer bis einiger hundert Mikrometer muss bei dieser Technologie auf eine Mehrfachbeschichtung zurückgegriffen werden. Dadurch entstehen Schichtstapel, deren Grenzflächen wieder eine geringere Qualität, das heißt eine hohe Rauigkeit besitzen können. Außerdem gibt es nur wenige Materialien, die sich drucken lassen und die gleichzeitig eine ausreichende optische Güte besitzen.

Es ist daher die Aufgabe der vorliegenden Erfindung, ein Substrat der genannten Art einerseits kostengünstig und andererseits auch mit individuell adressierbaren Funktionen für Anwendungen im Bereich von Lichtwellenleitern und/oder Mikrofluidik-Systemen herzustellen.

Diese Aufgabe wird gelöst durch das erfindungsgemäße Substrat nach Anspruch 1 bzw. durch ein Herstellungsverfahren nach dem ersten Verfahrensanspruch. Die Unteransprüche betreffen vorteilhafte Weiterbildungen der Erfindung.

Der vorliegenden Erfindung liegen dabei folgende Erkenntnisse zugrunde. Es wird davon ausgegangen, dass Anwendungen im Bereich der Lichtwellenleiter, der Mikrofluidik-Systeme und/oder dergleichen, und zwar insbesondere deren polymere Ausführungen, in Zukunft eine hohe kommerzielle Verbreitung finden werden, wie beispielsweise bei Analysegeräten von Flüssigkeiten, wie Wasser, Blut, Urin oder dergleichen, oder Stoffen anderer Aggregatzustände, wie insbesondere Gase. Dabei geht es also um eine kostengünstige Massenherstellung, die auch flexibel und qualitativ hochwertig ist. Das betrifft reine Mikrofluidiknetzwerke, reine Lichtwellenleiternetzwerke - auch mit zusätzlichen mikrooptischen Elementen - sowie entsprechende Mischformen. Dabei ist es vorteilhaft, solche Systeme mit elektrischen Leiterbahnen und/oder magnetischen Materialien zu verknüpfen.

Dabei ist weiterhin zu berücksichtigen, dass für viele Anwendungen aufgrund von Randbedingungen, wie beispielsweise Sterilität, nur Einmalgebrauch möglich bzw. gewünscht ist. Hierdurch ergibt sich besonderer Kostendruck, welchem nur durch Volumenproduktion begegnet werden kann. Die vorliegende Erfindung schafft die dafür notwendige Kombination aus einerseits Hochdurchsatzverfahren in der Herstellung und andererseits notwendiger Präzision und Flexibilität in der Funktionalität.

Durch die vorliegende Erfindung werden die Vorteile eines Hochdurchsatzverfahrens in der Herstellung verbunden mit der Möglichkeit zur individuellen Anpassung der Funktionalität für die genannten Anwendungen.

Der Kern der Erfindung liegt in der Kombination zweier Herstellungstechnologien. Denn es werden zunächst vorstrukturierte Substrate verwendet, die bereits ein Netzwerk aus hoch qualitativen Strukturen bevorzugterweise im Nano- und/oder im Mikrometerbereich aufweisen, die sich für Wellenleiter und/oder für ein Mikrofluidsystem eignen, und anschließend werden auf diesen vorstrukturierten Substraten mittels lokaler Belichtung bevorzugterweise nur die Pfade für Lichtwellenleiter und/oder Mikrofluidik definiert, die für die Anwendung benötigt werden. Dabei wird bei der lokalen Belichtung nur eine begrenzte Genauigkeit im Mikrometerbereich gefordert, wodurch diese recht schnell - beispielsweise durch ein schnelles Laserdirektschreiben - erfolgen kann. Das heißt also, dass das Problem der Wellenleiterqualität und des Herstellungsaufwands voneinander getrennt werden.

Hierbei ist von Bedeutung, dass durch das erfindungsgemäße Herstellungsverfahren auch multidimensionale Strukturen sowie Strukturen mit variierender Strukturtiefe und/oder Strukturbreite in nur einem Schritt hergestellt werden können.

Das hat weiterhin den Vorteil, dass für die Vorstrukturen, die als Blaupause für die späteren Pfade dienen, nur einmal ein Werkzeug - auch Master genannt - in sehr hoher Qualität hergestellt werden muss. Dies kann beispielsweise mittels Elektronenstrahllithografie erfolgen. Danach wird die aufwendig und teuer strukturierte Vorlage mittels Präzisionsspritzguss massenhaft in sehr hoher Qualität repliziert. Danach können mit einfachen Verfügungstechnologien vergrabene Wellenleiterstrukturen hergestellt werden, die mit Mikrofluidikstrukturen vereinbar sind.

Bei dem erfindungsgemäßen Substrat gemäß Anspruch 1 ist mindestens ein erster Kanal und/oder mindestens ein zweiter Kanal vorgesehen. Dabei ist der mindestens eine erste Kanal mit einem lichtleitenden Material gefüllt, so dass hierdurch ein Lichtwellenleiter gebildet wird. Der mindestens eine zweite Kanal hingegen ist frei von Material, also quasi leer, so dass durch ihn Stoffe, die flüssig, gasförmig oder dergleichen sind, geleitet werden können. Dabei ist es auch möglich, dass zwei Lichtwellenleiterkanäle vorgesehen sind, die beispielsweise mit einem Sensor, der mit und/oder ohne Mikrofluidik funktioniert, zusammenwirken.

Das erfindungsgemäße Substrat wird gebildet aus einem vorstrukturierten Grundsubstrat, das bereits eine Vielzahl von abschnittsweisen Vertiefungen aufweist, die netzwerkartig miteinander verbunden sind und somit bevorzugterweise Knotenpunkte bzw. Verzweigungen miteinander aufweisen, die im Folgenden auch gemeinsam vereinfacht als Knotenpunkte bezeichnet werden. Dabei treffen mehrere Abschnitte der Vertiefungen aufeinander - also zwei, drei, vier oder noch mehr. Bevorzugterweise, jedoch nicht notwendigerweise, sind diese Knotenpunkte derart gestaltet, dass die betreffenden Abschnitte hydraulisch und/oder pneumatisch miteinander verbunden sind. An vorgegebenen Stellen ist in diesen Vertiefungen ein Material vorhanden, wie Fotolack, Resist oder dergleichen, das durch einen Lithografieprozess strukturiert werden kann. Unter Lithografieprozess werden hier insbesondere solche Prozesse verstanden, bei denen
- bestimmte Bereiche selektiv durch elektromagnetische Strahlung - wie insbesondere Licht, UV-Strahlung oder dergleichen, durch Ionenstrahlen, durch Elektronenstrahlen bestrahlt werden (was hier auch allgemein als Belichten bezeichnet wird)
- und anschließend belichtetes oder unbelichtetes Material, wie Fotolack, Resist oder dergleichen, durch Lösungsmittel, durch einen Ätzprozess oder dergleichen entfernt wird.

Dabei kann das durch einen Lithografieprozess strukturierbare Material (wie Fotolack, usw.) nach Beendigung eines solchen Lithografieprozesses so strukturiert sein, dass einzelne der abschnittsweisen Vertiefungen einerseits miteinander verbunden sind und andererseits gegenüber unerwünschten Abschnitten abgegrenzt sind. Dadurch können die gewünschten Kanäle realisiert werden.

Fotolacke aus lichtleitenden Materialien können auch gezielt in vorgegebenen Abschnitten der Vertiefungen verbleiben, um einen Lichtwellenleiter wie gewünscht zu ermöglichen. Bei einer Ausgestaltung dieses Herstellungsverfahrens können für die Herstellung von Lichtwellenleiternetzwerken auch Fotolacke zum Einsatz kommen, in die durch zusätzliche Belichtungsschritte weitere optische Funktionalitäten eingeschrieben werden können. So können beispielsweise Gitterstrukturen, Brechzahlvariationen oder dergleichen eingebaut werden. Gitter können beispielsweise durch holografische Belichtung oder Maskenbelichtung sowie durch Direktschreiben mittels Laser oder Elektronenstrahl erzeugt werden. Brechzahlvariationen können beispielsweise durch eine lokale UV-Belichtung - ebenfalls direkt, per Maske und/oder holografisch - erzeugt werden.

Bei einer weiteren Ausgestaltung können neben den vielfältigen Wellenleiterpfaden auch zusätzliche optische Elemente, wie beispielsweise Strahlteiler, Mikroringresonatoren, Mach-Zehnder-Interferometer, usw. in das Netzwerk eingebettet werden. Dafür werden Vertiefungen für derartige Elemente schon in den vorstrukturierten Substraten mit der benötigten hohen Qualität integriert, beispielsweise durch Elektronenstrahllithografie, Laserdirektschreiben und/oder dergleichen. Durch den Replikationsprozess, wie beispielsweise durch Präzisionsspritzguss, bleibt die Qualität dieser Strukturen, wie beispielsweise der Lichtwellenleiter, erhalten. Anschließend können sie analog zu den Lichtwellenleitern durch den genannten Lithografieprozess wie gewünscht aktiviert werden.

Der Querschnitt eines Lichtwellenleiters auf dem erfindungsgemäßen Substrat wird hier bestimmt aus der Breite b und der Tiefe t der abschnittsweisen Vertiefungen, abhängig davon ist, ob er als Singlemode Wellenleiter oder als Multimode Wellenleiter arbeiten soll. Für Singlemode Wellenleiter haben sich für Lichtwellenlängen zwischen 400 nm und 2000 nm Werte für b und/oder t bewährt, die kleiner oder gleich 20 µm sind, wobei Werte zwischen 0,5 µm und 10 µm besonders vorteilhaft sind. Für Multimode Wellenleiter, die für Licht mit Lichtwellenlängen zwischen 400 nm und 2000 nm ausgelegt sind, haben sich Werte für b und/oder t bewährt, die zwischen 5 µm und 200 µm liegen, wobei hier der Bereich zwischen 10 µm und 100 µm besonders vorteilhaft ist.

Wenn die abschnittsweisen Vertiefungen für mikrofluidische Anwendungen strukturiert und verwendet werden sollen, sind Werte für b und/oder t vorteilhaft, die kleiner sind als 1000 µm, wobei sich der Bereich zwischen 1 µm und 500 µm besonders bewährt hat.

Es ist weiterhin besonders vorteilhaft, wenn zusätzlich zu den genannten Kanälen weitere Kanäle erzeugt werden, die zunächst materialfrei sind und in die anschließend ein elektrisch-leitendes und/oder ein magnetisches Material gefüllt wird.

Wenn außerdem die verschiedenen Kanäle so geführt sind, dass sie sich zumindest teilweise berühren und/oder kreuzen, sind vielfältige Messungen möglich; insbesondere von Flüssigkeiten, sofern entsprechende mikrofluidische Kanäle vorhanden sind.

Ein Substrat, das Lichtwellenleiter, Mikrofluidikkanäle und/oder weitere der genannten Elemente aufweist, kann nach folgendem Verfahren hergestellt werden.

Ein bevorzugtes Herstellungsverfahren beinhaltet folgende Stadien:
1. Vorform
2. Master, auch Werkzeug genannt
3. vorstrukturiertes Grundsubstrat, auch Rohling genannt
4. bearbeitetes Substrat, das anschließend für Messungen, Analysen oder dergleichen verwendet werden kann.

Die genannte Vorform ist zunächst ein ebenes Grundsubstrat, das üblicherweise besteht aus in der Lithografie geläufigen Materialien, wie beispielsweise Silizium, Glas oder ähnlich. Darauf wird ein lithografisch strukturierbares Material, wie z.B. ein Fotolack oder Resist aufgebracht. Durch Prozesse, wie Foto-, Ionen- oder Elektronenstrahllithografie werden in diesem strukturierbaren Material die Geometrien für die gewünschten Vertiefungen erzeugt, also für eventuelle Lichtwellenleiter, Mikrofluidikkanäle und/oder für sonstige Elemente. Der Lithografieprozess beinhaltet sowohl Belichtungs- als auch Entwicklungsschritte, die allgemein bekannt sind. Deshalb wird hier nicht näher darauf eingegangen. Für größere Strukturen, bei denen die Breite b und die Tiefe t größer als 10 µm sind, eignen sich auch besonders Fräsprozesse und Laserdirektschreiben. Die Herstellung einer solchen Vorform ist recht aufwendig und daher kostenintensiv.

Anschließend wird der Master erstellt (oder ggf. auch mehrere davon), wobei die genannte Vorform als Vorlage dient. Es hat sich bewährt, dafür ein Galvanikverfahren zu nutzen, bei dem Nickel oder ähnliches aufgetragen wird. Derartige Verfahren sind insbesondere bekannt im Zusammenhang mit der Herstellung von CDs (Compact Discs) bzw. DVDs (Digital Versatile Discs), so dass hier nicht weiter darauf eingegangen wird. Der Master ist eine Negativkopie der Vorform, so dass hier die oben genannten Vertiefungen als Erhebungen abgebildet sind.

Anschließend wird das oben genannte vorstrukturierte Grundsubstrat erstellt (bevorzugterweise eine Vielzahl davon), wobei der Master als Werkzeug dient. Das Grundsubstrat besteht üblicherweise aus einem relativ preiswerten Kunststoff, wie beispielsweise PMMA (Polymethylmethacrylat). Dieser wird durch Präzisionsspritzguss oder durch eine andere Replikationsmethode, wie beispielsweise Nanoimprintlithografie, in Form gebracht und mit den gewünschten Oberflächenstrukturen versehen. Das Grundsubstrat ist eine entsprechende Negativkopie des genannten Werkzeugs (Masters) und daher eine Kopie der genannten Vorform mit den dort genannten Vertiefungen. Aufgrund des genannten Herstellungsverfahrens weist das Grundsubstrat einerseits sehr präzise Strukturen auf und ist andererseits auch in größeren Stückzahlen recht preiswert herzustellen.

Das bearbeitete Substrat entsteht aus dem genannten Grundsubstrat, indem Material aufgebracht wird, das durch einen Lithografieprozess strukturiert werden kann, wie beispielsweise Fotolack oder dergleichen. Dieses Material dringt auch in die vorhandenen Vertiefungen ein und kann durch den oben beschriebenen Lithografieprozess strukturiert werden. Dadurch können die gewünschten Lichtwellenleiter, Mikrofluidkanäle und/oder sonstige Elemente einerseits sehr präzise und andererseits auch recht kostengünstig realisiert werden.

Das erfindungsgemäße Herstellungsverfahren gemäß dem ersten Verfahrensanspruch umfasst die Herstellung des bearbeiteten Substrats mittels des Grundsubstrats. Dabei handelt es sich also um die Herstellung eines Substrats, das Lichtwellenleiter, Mikrofluidkanäle und/oder weitere der genannten Elemente aufweist. Derartige Substrate sind insbesondere die erfindungsgemäßen Substrate, wie oben beschrieben bzw. durch die zugehörigen Ansprüche angegeben. Das erfindungsgemäße Herstellungsverfahren kann jedoch auch für sonstige Substrate dieser Art verwendet werden.

Eine Weiterbildung des erfindungsgemäßen Herstellungsverfahrens umfasst auch die Herstellung des vorstrukturierten Grundsubstrats mittels des Masters (Werkzeugs).

Weitere Einzelheiten und Vorteile der vorliegenden Erfindung werden im Folgenden anhand von bevorzugten Ausführungsbeispielen mit zugehörigen Abbildungen erläutert. Dabei zeigen
- Fig. 1: Draufsicht auf ein vorstrukturiertes Substrat
- Fig. 2: Seitenansicht auf das vorstrukturierte Substrat entlang Pfeil P
- Fig. 3: Draufsicht auf ein Substrat mit ausgewählten Lichtwellenleiterpfaden
- Fig. 4: Substrat mit Lichtwellenleiterkanal und Mikrofluidikkanal

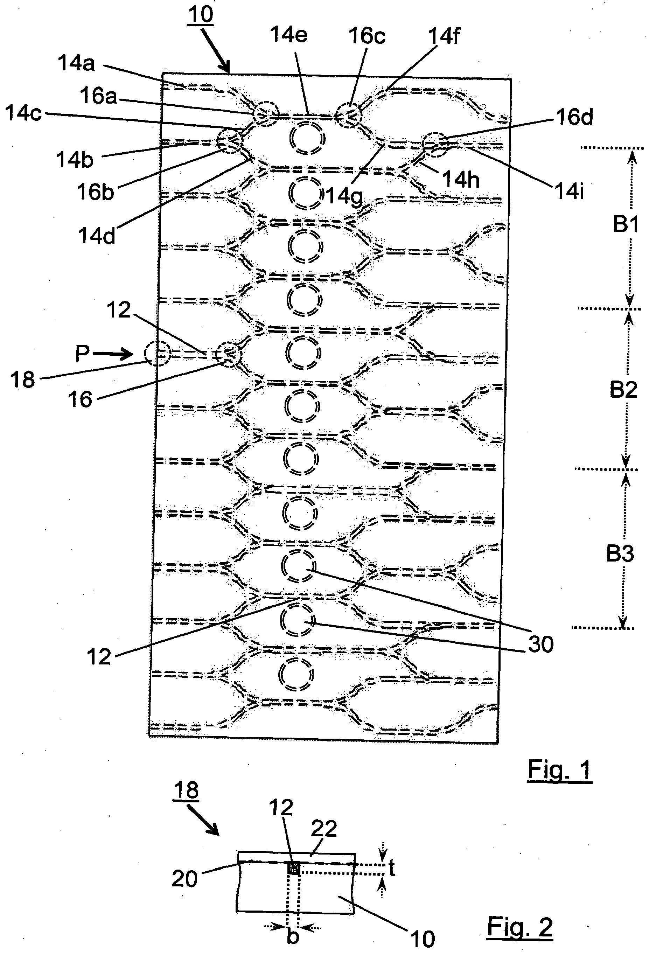

Das erste bevorzugte Ausführungsbeispiel betrifft die Herstellung eines Substrats mit ausgewählten strukturierten Lichtwellenleiterpfaden. Dieses wird mithilfe der Figuren 1 bis 3 beschrieben. Anschließend werden weitere bevorzugte Ausführungsbeispiele beschrieben, die ausgewählte strukturierte Kanäle für mikrofluidische oder sonstige Anwendungen aufweisen. Weitere bevorzugte Ausführungsbeispiele sind Kombinationen von mehreren dieser unterschiedlichen Anwendungen, wie Lichtwellenleiterpfad, Mikrofluidik-Systeme und/oder dergleichen. Alle bevorzugten Ausführungsbeispiele gehen von einem vorstrukturierten Grundsubstrat aus, das durch geeignete Arbeitsschritte weiter bearbeitet wird.

Fig. 1 zeigt eine Draufsicht auf ein vorstrukturiertes Substrat 10. Dieses weist bereits ein Netzwerk von Vertiefungen 12 auf, die nach weiterer Bearbeitung ausgewählte Lichtwellenleiterpfade und/oder auch optische Elemente, wie beispielsweise Strahlteiler, Mach-Zehnder-Interferometer, usw. ermöglichen. Dieses Netzwerk ist derart strukturiert, dass einzelne Abschnitte 14 der Vertiefungen 12 sich in einem zugehörigen Knotenpunkt bzw. einer Verzweigung 16 treffen. Dieses wird im Folgenden beispielhaft näher anhand der Abschnitte 14a,...,i erläutert, die sich im oberen Teil des Substrats 10 befinden.

Oben links auf dem Substrat 10 befindet sich ein Abschnitt 14a, der zu einem Knotenpunkt 16a verläuft. Ebenfalls auf der linken Seite des Substrats 10 befindet sich unterhalb des Abschnitts 14a ein weiterer Abschnitt 14b. Dieser verläuft zu einem weiteren Knotenpunkt 16b und wird dort verzweigt in die beiden Abschnitte 14c und 14d. Abschnitt 14c mündet in Knotenpunkt 16a und trifft dort auf Abschnitt 14a, was zu dem Abschnitt 14e führt. Abschnitt 14e verzweigt sich in einem weiteren Knotenpunkt 16c in die beiden Abschnitte 14f und 14g. Abschnitt 14g trifft in Knotenpunkt 16d auf einen weiteren Abschnitt 14h. Beide verlaufen gemeinsam als Abschnitt 14i bis an den rechten Rand des Substrats 10, wie auch der Abschnitt 14f.

Wie bereits erwähnt, ist die Beschreibung der Abschnitte 14a,...,14i und der zugehörigen Knotenpunkte 16a,...,d nur beispielhaft. Ähnliche Verläufe ergeben sich an anderen Stellen des Substrats 10, worauf hier jedoch nicht näher eingegangen wird. Wie aus Fig. 1 auch erkennbar, weist in diesem Ausführungsbeispiel das gezeigte Netzwerk eine Symmetrie insofern auf, dass die Netzwerk-Struktur innerhalb des Bereichs B1 gleich ist wie in den Bereichen B2 und B3 (siehe Markierung am rechten Rand von Fig. 1), welche hier ebenfalls nur beispielhaft genannt sind. Eine solche Symmetrie ist jedoch nicht zwangsläufig notwendig.

Fig. 2 stellt eine Seitenansicht auf das Substrat 10 dar - und zwar in Richtung des Pfeils P auf einen Bereich 18, der in Fig. 1 durch einen Kreis markiert ist. Hier ist zunächst eine symbolische Querschnittsdarstellung für die Vertiefungen 12 erkennbar. Diese haben innerhalb des Substrats 10 eine horizontale Breite b sowie eine vertikale Tiefe t.

Das in Fig. 1 und 2 gezeigte vorstrukturierte Substrat 10 wird bevorzugterweise mit einem Master und einem Material, wie beispielsweise PMMA, durch Präzisionsspritzgussoder durch eine andere Replikationsmethode, wie beispielsweise Nanoimprintlithografie, hergestellt. Das in Fig. 1 und 2 gezeigte Substrat 10 ist also eine entsprechende Negativkopie des genannten Masters.

Die Breite b und die Tiefe t der Vertiefungen 12 hängen von der gewünschten Anwendung ab. Für Lichtwellenleiter, die Licht mit Wellenlängen zwischen 400 nm und 2000 nm leiten sollen, haben sich folgende Werte besonders bewährt:
b = 0,5 bis 100 µm und t = 1 bis 100 µm, wobei
   - für Singlemode Wellenleiter b und t jeweils einen Wert haben, der im Bereich zwischen 0,5 und 10 µm liegt und
   - für Multimode Wellenleiter die Werte für b und t üblicherweise größer als 10 µm sind.

Für die Weiterbearbeitung des in Fig. 1, 2 gezeigten vorstrukturierten Substrats 10 wird darauf Fotolack 22 schichtförmig aufgetragen (s.a. Fig. 2). Dieser dringt dabei auch in die Vertiefungen 12 ein. Da sich dieses erste Ausführungsbeispiel auf die Herstellung von Lichtwellenleitern bzw. sonstigen optischen Elementen, wie Strahlteiler, Mach-Zehnder-Interferometer, usw. bezieht, verbleibt innerhalb der Kanäle K1, K2, K3 nach deren Bearbeitung ausgehärteter Fotolack 22, durch den das Licht wie gewünscht geleitet wird.

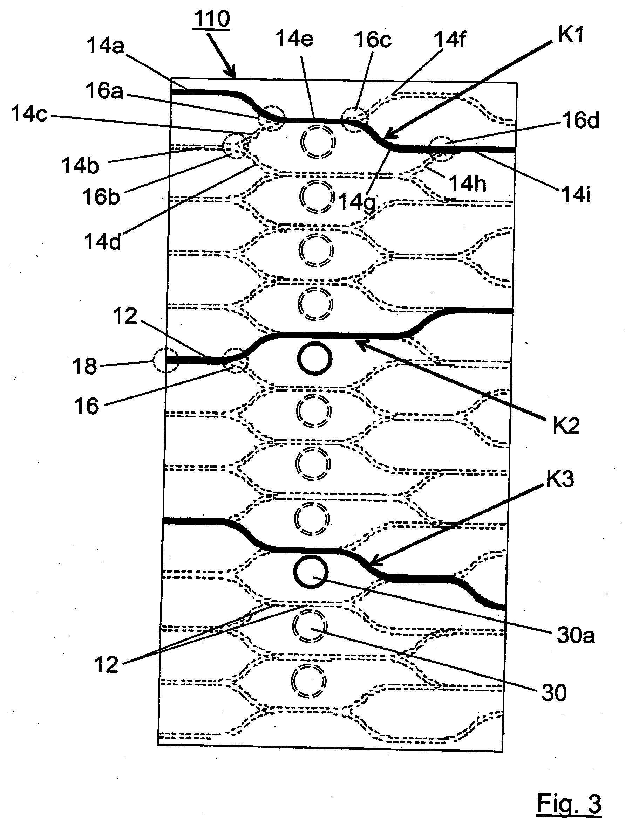

Fig. 3 zeigt ein bearbeitetes Substrat 110, das entstanden ist aus dem vorstrukturierten Substrat 10 und das drei ausgewählte Pfade aufweist, die entlang der Kanäle K1, K2, K3 und somit entlang ausgewählter Abschnitte 14 der Vertiefungen 12 verlaufen. Für den Kanal K1 sind das beispielsweise die Abschnitte 14a, 14e, 14g und 14i. Die Abschnitte entlang der übrigen beiden Kanäle K2, K3 sind nicht gesondert markiert. Die Herstellung derartiger Kanäle bzw. Elemente erfolgt bevorzugterweise nach folgendem Verfahren.

Der sich innerhalb der Vertiefungen 12 befindende Fotolack 22 ist ein sogenannter Negativlack und wird mittels einer geeigneten Lichtquelle, wie einem Laser oder einer Lampe, belichtet und zwar im Bereich der zugehörigen Abschnitte 14, wie beispielsweise 14a, 14e, 14g, 14i, usw. In Abhängigkeit von der Belichtungsquelle wird dazu auch eine geeignete Maske verwendet. In einem weiteren Arbeitsschritt wird nicht belichteter Fotolack 22 mittels geeigneter Lösungsmittel entfernt, so dass licht-leitender Fotolack nur innerhalb der Vertiefungen 12 entlang der gewünschten Lichtwellenleiter-Kanäle K1, K2, K3 verbleibt. Außerhalb der Kanäle K1, K2, K3 sind die Vertiefungen bei diesem Ausführungsbeispiel also frei von Fotolack. Sofern sie nicht mit einem anderen Material gefüllt werden, können sie beispielsweise für mikrofluidische Anwendungen verwendet werden, worauf weiter unten noch detaillierter eingegangen wird.

Bei einer Weiterbildung des bevorzugten Verfahrens ist es auch möglich, den zunächst nicht belichteten Fotolack anschließend mit einer anderen Wellenlänge zu belichten, damit er einen anderen Brechungsindex erhält. Der andere Brechungsindex wird vor allem im Bereich der Abzweigungen 16 gebraucht. Wenn eine Abzweigung bzw. Kanalaufteilung nicht verwendet wird, sollte der abzweigende aber nicht verwendete Kanal dennoch zumindest teilweise gefüllt werden und zwar bevorzugterweise mit einem Material, das einen ähnlichen aber nicht gleichen Brechungsindex wie der Wellenleiterkanal aufweist, weil an diesen Stellen ein Brechungsindexsprung zwischen Wellenleiter und Luft zu Lichtstreuung und damit hohen Signalverlusten führen würde. Für die erste Belichtung ist beispielsweise UV-Licht (Wellenlänge λ etwa 350 nm) und für die zweite Belichtung ist beispielsweise blaues Licht (Wellenlänge λ etwa 405 nm) geeignet.

In Fig. 1 und 3 sind auch eine Vielzahl von Ringresonatoren 30 vorgesehen, die als Sensorelemente dienen können. Derartige Sensorelemente nutzen Resonanzeffekte der Ringwellenleiter 30 zur Detektion von Änderungen der Umgebungsbedingungen, wie beispielsweise Temperatur, Brechungsindex oder dergleichen. Zunächst sind alle diese Ringresonatoren 30 inaktiv (s. Fig. 1), da ihre Vertiefungen leer also frei von Material sind. Im vorliegenden Ausführungsbeispiel wurden während des Herstellungsverfahrens zwei davon aktiviert, die in Fig. 3 jetzt mit einer durchgezogenen Linie versehen und mit der Referenz 30a bezeichnet sind. Die aktivierten Ringresonatoren 30a entstehen dadurch, dass am Ende des Herstellungsverfahrens in ihren Vertiefungen belichteter und damit ausgehärteter Fotolack verbleibt; ähnlich wie bei den Kanälen K1, K2, K3.

Wie bereits mehrfach erwähnt, lässt sich die Erfindung nicht nur für Lichtwellenleiter verwenden, sondern stattdessen oder zusätzlich auch für Mikrofluidik und weitere Anwendungen. Die bereits beschriebenen Verfahrensschritte zur Herstellung eines solchen Substrats 110 sind weitestgehend gleich wie für die Lichtwellenleiter beschrieben. Bevorzugterweise gibt es jedoch folgende Unterschiede.

Für mikrofluidische Anwendungen haben die Vertiefungen 12, die jetzt auch als Mikrofluidikkanäle bezeichnet werden, folgende Abmessungen:

| | |
|---|---|
| Breite b = 1 bis 500 µm; | Tiefe t = 1 bis 500 µm. |

Zur Herstellung solcher Strukturen in den Vorformen eignen sich beispielsweise Fräsprozesse und/oder Laserdirektschreiben besonders gut.

Der Herstellungsprozess muss so verlaufen, dass die gewünschten Mikrofluidikkanäle am Ende des Herstellungsprozesses leer sind. Entlang eines Kanalpfads müssen jedoch alle nicht genutzten Anschlüsse verschlossen werden, was bevorzugterweise durch Fotolack realisiert wird.

Die Vertiefungen 12 können auch für elektrische und/oder magnetische Leiterbahnen verwendet werden. Dafür werden die Vertiefungen 12 entlang des gewünschten Verlaufs während des Herstellungsverfahrens zunächst von dem Fotolack 22 durch geeignete Arbeitsschritte befreit, so dass sie quasi leer sind. Dabei werden auch hier alle nicht genutzten Anschlüsse verschlossen, wie beispielsweise durch Fotolack. Anschließend werden in die leeren Kanäle ein elektrisch leitfähiges bzw. ein magnetisches Material eingeführt. Dieses kann am Ende des Herstellungsprozesses jeden beliebigen Aggregatzustand aufweisen, wie insbesondere fest, flüssig oder gasförmig. Ein ähnliches Verfahren ist auch für weitere Wellenleiteranwendungen möglich, sofern das eingeführte Material auch als Lichtwellenleiter geeignet ist.

Ein Substrat 110, bei dem mindestens ein erster Pfad der Vertiefungen 12 als mikrofluidischer Kanal ausgebildet ist und bei dem außerdem mindestens ein weiterer Pfad der Vertiefungen 12 als optischer, elektrischer und/oder magnetischer Leiter ausgebildet ist, lässt sich besonders vorteilhaft für die Analyse von Flüssigkeiten, Gasen oder dergleichen verwenden. Das gilt insbesondere dann, wenn der erste Pfad und die weiteren Pfade aufeinander treffen oder sich kreuzen.

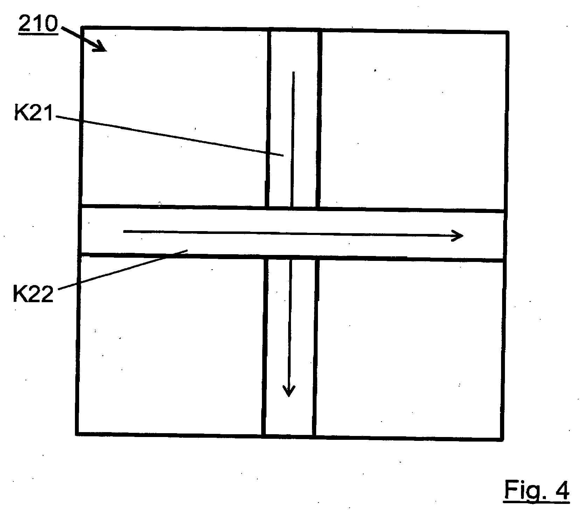

Fig. 4 zeigt symbolisch eine Ausführungsform, bei der sich auf einem Substrat 210 ein Lichtwellenleiterkanal K21 und ein Mikrofluidikkanal K22 kreuzen. Dabei deuten die jeweiligen Pfeile die Strahlrichtung bzw. die Flussrichtung an. Eine derartige Anordnung eignet sich für optische Untersuchungen des in dem Mikrofluidikkanal K22 befindlichen Materials, wie beispielsweise mittels Verfahren der Absorption, der Lichtstreuung und/oder der Fluoreszenz.

Es sei darauf hingewiesen, dass die beschriebenen Ausführungsbeispiele zwar bevorzugt sind, jedoch vorteilhafte Abwandlungen möglich sind. Dazu gehören beispielsweise:
- das bearbeitete Substrat 110 bzw. die darin enthaltenen Kanäle werden mit einer Deckschicht versehen, damit das in den Kanälen enthaltene Material nicht entweichen kann bzw. geschützt wird.
- Es ist ebenfalls möglich, dass bei dem Herstellungsprozess ein Positivlack verwendet wird, also ein Fotolack der dort durch Lösungsmittel entfernt werden kann, wo er zuvor belichtet wurde.

### Bezugszeichenliste

- 10: Vorstrukturiertes Substrat
- 12: Vertiefungen in 10
- 14; 14a,...,14i: Abschnitte von 12
- 16; 16a,...,16d: Knotenpunkte, Verzweigungen
- 18: Sichtbereich (für Fig. 2)
- 20: Oberfläche von 10
- 22: Fotolack
- 30: Vertiefung für Ringresonatoren; nicht aktiviert (gestrichelt)
- 30a: Ringresonatoren; aktiviert (durchgezogene Linie)
- 110, 210: Bearbeitetes Substrat
- B1, B2, B3: Bereiche
- b: Breite von 12
- t: Tiefe von 12
- P: Pfeil (Blickrichtung)
- K1, K2, K3; K21: Kanäle für Lichtwellenleiter
- K22: Kanal für Mikrofluidik

## Patentansprüche

1. Substrat (110) mit mindestens einem ersten Kanal (K1, K2, K3; K21), der gefüllt ist mit lichtleitendem Material (22) und/oder mit mindestens einem zweiten Kanal (K22), der frei von Material und so beschaffen ist, dass durch ihn Stoffe geleitet werden können, **dadurch gekennzeichnet, dass** das Substrat (110) gebildet wird aus einem vorstrukturiertem Grundsubstrat (10), das eine Vielzahl von abschnittsweisen Vertiefungen (12) aufweist, die netzwerkartig miteinander verbunden sind und in denen an vorgegebenen Stellen durch einen Lithografieprozess strukturierbares Material (22) vorhanden ist.

2. Substrat (110) nach Anspruch 1, **dadurch gekennzeichnet, dass** das Netzwerk der Vertiefungen (12) Knotenpunkte bzw. Verzweigungen (16) aufweist.

3. Substrat (110) nach einem der vorigen Ansprüche, **dadurch gekennzeichnet, dass** das durch einen Lithografieprozess strukturierbare Material (22) zumindest in einzelnen der abschnittsweisen Vertiefungen (12) als das lichtleitende Material (22) verwendet wird.

4. Substrat (110) nach einem der vorigen Ansprüche, **dadurch gekennzeichnet, dass** mindestens ein zusätzliches optisches Element, wie beispielsweise Strahlteiler, Mikroringresonator, Mach-Zehnder-Interferometer, usw. im Bereich von mindestens einem der ersten Kanäle (K1, K2, K3; K21) angeordnet ist.

5. Substrat (110) nach einem der vorigen Ansprüche, **dadurch gekennzeichnet, dass** die Breite (b) und/oder die Tiefe (t) der Vertiefungen (10) des ersten Kanals (K1, K2, K3; K21) einen Wert hat, der kleiner oder gleich ist als 20 µm.

6. Substrat (110) nach einem der vorigen Ansprüche, **dadurch gekennzeichnet, dass** die Breite (b) und/oder die Tiefe (t) der Vertiefungen (10) des ersten Kanals (K1, K2, K3; K21) einen Wert hat, der zwischen 5 µm und 200 µm liegt.

7. Substrat (110) nach einem der vorigen Ansprüche, **dadurch gekennzeichnet, dass** die Breite (b) und/oder die Tiefe (t) der Vertiefungen (10) des zweiten Kanals (K22) einen Wert hat, der kleiner oder gleich ist als 1000 µm.

8. Substrat (110) nach einem der vorigen Ansprüche, **dadurch gekennzeichnet, dass** mindestens ein dritter Kanal vorgesehen ist, der gefüllt ist mit elektrischleitfähigem und/oder mit magnetischem Material.

9. Substrat (110) nach einem der vorigen Ansprüche, **dadurch gekennzeichnet, dass** mindestens einer der ersten Kanäle (K1, K2, K3; K21), der zweiten Kanäle (K22) oder der ggf. vorhandenen dritten Kanäle in oder durch einen der anderen Kanäle geleitet wird.

10. Verfahren zur Herstellung eines Substrats (110) nach einem der zuvor genannten Ansprüche, **dadurch gekennzeichnet, dass**
• ein vorstrukturiertes Grundsubstrat (10) verwendet wird, das eine Vielzahl von abschnittsweisen Vertiefungen (12) aufweist, die netzwerkartig miteinander verbunden sind,
• ein durch einen Lithografieprozess strukturierbares Material (22) zumindest in einzelne der Vertiefungen (12) eingebracht wird,
• ein Belichtungsprozess erfolgt, bei dem das durch einen Lithografieprozess strukturierbare Material (22) an vorgegebenen Stellen belichtet wird,
• das durch einen Lithografieprozess strukturierbare Material (22) an den belichteten oder an den unbelichteten Stellen entfernt wird, so dass
zumindest einzelne der abschnittsweisen Vertiefungen (12) einen der ersten Kanäle, einen der zweiten Kanäle und/oder einen der dritten Kanäle bilden.

11. Verfahren nach dem vorherigen Anspruch, **dadurch gekennzeichnet, dass** das Grundsubstrat (10) mittels eines Werkzeugs hergestellt wird durch Präzisionsspritzguss oder durch eine andere Replikationsmethode, wie beispielsweise Nanoimprintlithografie.
